# EUROPÄISCHE PATENTSCHRIFT

(11) **EP 0 849 505 B1**
(45) Veröffentlichungstag und Bekanntmachung des Hinweises auf die Patenterteilung: **21.04.2004**
(21) Anmeldenummer: 97121215.4
(22) Anmeldetag: 03.12.1997
(51) Int. Cl.: F16H 61/12

(54) **Verfahren und Vorrichtung zur Früherkennung von Störfällen beim Betrieb automatischer Getriebe**
Method and apparatus for early detection of errors during operation of automatic transmissions
Procédé pour la reconnaissance anticipée des pannes lors du fonctionnement de transmissions automatiques.

(30) Priorität: 17.12.1996 DE 19652212
(43) Veröffentlichungstag der Anmeldung: 24.06.1998
(60) Teilanmeldung: 03021364.9
(73) Patentinhaber: Voith Turbo GmbH & Co. KG, 89522 Heidenheim (DE)
(72) Erfinder: Depping, Herbert, 89537 Giengen (DE); Häberle, Friedrich, 89518 Heidenheim (DE); Rotter, Erwin, 89564 Nattheim (DE); Schempp, Volker, 73271 Holzmaden (DE); Maier, Wilfried, 89518 Heidenheim (DE)
(74) Vertreter: Dr. Weitzel & Partner

(56) Entgegenhaltungen:
- EP-A- 0 176 750
- EP-A- 0 668 456
- WO-A-97/08479
- DE-A- 4 110 910
- DE-A- 4 217 270
- US-A- 4 653 350
- US-A- 4 982 621
- US-A- 5 293 789

## Beschreibung

Die Erfindung betrifft ein Verfahren zur Früherkennung von Störfällen beim Betrieb automatischer Getriebe mit vorzugsweise elektrohydraulisch betätigbaren Reibelementen, im einzelnen mit den Merkmalen aus dem Oberbegriff des Anspruchs 1; ferner eine Steuervorrichtung für ein automatisches Getriebe.

Automatische Getriebe, insbesondere automatische Fahrzeuggetriebe, sind in einer Vielzahl von Ausführungen bekannt. Diese können als rein mechanisches Getriebe, als Kombination wenigstens eines mechanischen Getriebeteiles mit einem hydraulischen Getriebeteil, eines mechanischen Getriebeteiles mit einem elektrischen Getriebeteil oder aber als stufenloses mechanisches Getriebe vorliegen. Der hydraulische Getriebeteil kann dabei entweder als hydrostatisches Getriebe oder aber als hydrodynamisches Bauelement ausgeführt sein. Getriebe, welche wenigstens zwei unterschiedliche Getriebeteile umfassen, arbeiten entweder in Reihe geschalten und/oder mit Leistungsverzweigung, d.h. es besteht die Möglichkeit, die gesamte zu übertragende Leistung über lediglich einen der beiden Getriebeteile zu übertragen. Derartige Getriebe sind beispielsweise aus den folgenden Druckschriften bekannt:
1. J.M. Voith GmbH: Hydrodynamik in der Antriebstechnik, Krauskopf-Verlag 1987
2. Gerigk, Bruhn, Danner, Endruschad, Göbert, Kross, Gomol: Kraftfahrzeugtechnik, Westermann-Verlag 1994

In Fahrzeuggetrieben finden hauptsächlich Getriebe mit einem hydrodynamischen Getriebeteil und einem nachgeschalteten mechanischen Getriebeteil Verwendung. Des weiteren werden vereinzelt auch stufenlose Getriebe in Form eines Zugmittelgetriebes mit Schubgliederband eingesetzt.

Bei automatischen Getrieben erfolgt bei Betätigung des Gangschalthebels über einen Elektrokontakt die Betätigung eines Steuerventiles, welches auf die einzelnen Schaltelemente einwirkt. Bei den vollautomatischen Getrieben werden die Gänge über eine hydraulische oder elektro-hydraulische Steuerungseinrichtung automatisch in Abhängigkeit von der Motorbelastung und der Fahrzeuggeschwindigkeit geschaltet. Die Schaltung geschieht dabei mit Hilfe von Bremsbändern und Mehrscheibenkupplungen unter Last. Als Schaltelemente finden hauptsächlich hydraulisch betätigte Reibelemente, vorzugsweise in Form einer Lamellen- oder Scheibenkupplung - und/oder Bremse, Anwendung. Diese übernehmen die Aufgabe, den Kraftfluß im Getriebe entsprechend dem geschalteten Gang herzustellen oder zu unterbrechen.

Im allgemeinen werden die Schaltventile der Schaltelemente, welche die Aufgabe haben, die Öldrücke zu den Betätigungseinrichtungen, d.h. den Schaltelementen zu steuern, für die einzelnen Gangstufen durch verschiedene Drücke beeinflußt Dazu wird die Fahrgeschwindigkeit indirekt an der Getriebeausgangswelle mit einem Fliehkraftregler gemessen. Die Meßergebnisse werden als entsprechende Reglerdrücke an ein Steuergerät geleitet. Das Motordrehmoment wird über den Saugrohrunterdruck ermittelt und als entsprechender Modulatordruck an das Steuergerät weitergeleitet. Dort beeinflussen die Drücke die Stellung der Schaltventile.

Die Lage der Schaltpunkte hängt dabei im wesentlichen von der Fahrgeschwindigkeit und dem Motordrehmoment ab. Eine hohe Fahrgeschwindigkeit bedeutet eine hohe Drehzahl der Abtriebswelle und damit ein hoher Reglerdruck. Des weiteren bedeutet ein hohes Motordrehmoment einen niedrigen Unterdruck im Ansaugrohr des Motors und damit einen hohen Modulatordruck sowie umgekehrt. Diese Drücke wirken auf die Schaltventile. Die Schaltventile haben dann die Aufgabe, die Öldrücke zu den Betätigungseinrichtungen zu steuern. Dies geschieht in Abhängigkeit vom Schaltprogramm und der Fahrsituation. Im einzelnen bedeutet dies, daß in der Ruhestellung die Schaltventile meist nur federbelastet sind. Die durch Regler und Modulatordruck erzeugten Kräfte an den äußeren Kolben der Schaltventile bestimmen deren Stellung. Bei Stillstand des Fahrzeuges und laufenden Motor wirken nur die Federkraft und die aus dem Modulatordruck entstehende Modulatorkraft auf die Schaltventile. Erhöht sich z. B. mit steigender Fahrgeschwindigkeit bei konstanter Drosselklappenstellung der Reglerdruck, so wird der Schaltkolben bei der im Schaltprogramm festgelegten Fahrzeuggeschwindigkeit in die Stellung für den nächsthöheren Gang geschoben. Bei Erreichen einer festgelegten Fahrgeschwindigkeit ist der Reglerdruck so weit angestiegen, daß dann das nächste Schaltventil gegen den Modulatordruck in den nächsthöheren Gang geschaltet wird. Derzeit werden für vollautomatische Getriebe auch elektro-hydraulische Steuerungen verwendet. Die Hydraulik übemimmt dabei weiterhin die Betätigung der Schaltelemente, während die Steuerung der Schaltvorgänge elektronisch erfolgt. Dies bietet den Vorteil, daß zum einen mehrere Schaltprogramme, beliebige Schaltkennlinien sowie eine vereinfachte Hydraulik und eine Kombination von Getriebe und Motorelektronik möglich ist. Eine ständige Weiterentwicklung der Schaltprogramme ermöglicht eine optimale Anpassung und Reaktion auf äußere Einflüsse.

Störungen an automatischen Getrieben machen sich besonders bemerkbar durch auffällige Getriebegeräusche und nicht einwandfrei ablaufende Schaltvorgänge. Zur Erkennung der Ursachen von Schaltstörungen ist es bakannt, den Modulator, Regler- und Arbeitsdruck zu prüfen. Das Getriebe wird dazu mit den notwendigen Prüfanschlüssen versehen, an die Prüfgeräte mit verschiedenen Meßbereichen angeschlossen werden können. Der Modulator- und Arbeitsdruck können im Stand bei laufendem Motor überprüft werden. Die Messung des Reglerdruckes muß jedoch während der Fahrt oder auf dem Rollenprüfstand erfolgen. Meist erfolgt jedoch die Diagnose erst, nachdem bereits Schaltstörungen aufgetreten sind, im einzelnen bereits auffällige Getriebegeräusche zu einem erhöhten Verschleiß der Reibelemente geführt haben. Indikatoren zur Ermitttung von Schaltstörungen sind somit Störungen im Betrieb des automatischen Getriebes, welche bereits von einer Schädigung herrühren. Zur Beseitigung sind dann in der Regel Bauteilaustauschmaßnahmen erforderlich.

Aus der Gattungsbildenden Druckschrift DE 41 10 910 A1 ist ein Verfahren zur Früherkennung von Störfällen durch die Erkennung von Änderungen im Schaltverhalten vorbekannt, bei welchem ein Schaltzeitintervall von der Auslösung bis zur Beendigung eines Schaltvorganges überwacht wird und durch Drucksteuerung beeinflusst wird, wobei der für die Bestimmung des dafür erforderlichen Arbeitsspiels vorgesehene Korrekturwert, mit welchem ein einen Speichergegendruck bestimmendes Magnet-Linearventil erregt wird, als Funktion aus einer Mehrzahl von Parametern ermittelt wird. Bei Auftreten eines abnormen Zeitintervalls wird eine Wameinrichtung aktiviert. Dabei wird die Anzahl der Abweichungen außerhalb eines Normbereiches ermittelt und ferner auch eine Unterscheidung bezüglich der Einordnung in unterschiedliche Zeitintervallbereiche vorgenommen, wobei bei Erreichen bestimmter Zeitintervalle ebenfalls eine Wameinrichtung aktiviert wird.

Aus der Druckschrift DE 4217 270 A1 ist ein Verfahren zur adaptiven Korrektur der Schaltqualität eines automatischen Getriebes vorbekannt, bei welchem über druck- oder öldurchsatzbeaufschlagende Stellglieder Reibelemente in Form von Kupplungen oder Bremseinrichtungen in Eingriff bringbar sind, wobei der von de Stellgliedern beaufschlagte Leitungsdruck mittels einer elektronischen Einrichtung erfasst und in Abhängigkeit von verschiedenen Betriebsparametem korrigiert wird. Dabei wird für jeden Gangwechsel neben dem sich ergebenden Übersetzungsverhältnis als Funktion der Zeit vom Auslösen des Schaltvorganges bis zu dessen Beendigung die erste Ableitung gebildet und in der elektronischen Einrichtung eine Kennlinie gebildet, die mit vorhandenen Referenzkenntinien verglichen wird, wobei bei Ungleichheit ein Korrekturfaktor ermittelt wird, der beim nächsten Gangwechsel dieser Art zu einer inkrementalen Erhöhung oder dekrementalen Erniedrigung eines Korrekturwertes um den Korrekturfaktor führt und somit eine Korrektur des Leitungsdruckes oder Öldurchflusses entsprechend dem Korrekturwert erfolgt. Dabei wird für den Korrekturwert ein Grenzwert gesetzt und bei Überschreitung dessen ein Wamhinweis auf eine nicht mehr ordnungsgemäß durchführbare Schaltung abgegeben. Hierbei wird im wesentlichen das Änderungsverhalten des Korrekturwertes beurteilt. Beide Lösungen zeichnen sich hinsichtlich der Korrekturwertbestimmung und Auswertung der überwachten Größen durch einen hohen Aufwand hinsichtlich der dazu zu erfassenden Größen sowie deren Aufarbeitung aus.

Der Erfindung liegt deshalb die Aufgabe zugrunde, ein Verfahren zur frühzeitigen Erkennung von Störfaktoren beim Betrieb eines automatischen Getriebes zu entwickeln, das es ermöglicht, Schädigungen aufgrund äußerer Einflüsse oder anderer Störfaktoren möglichst gering zu halten oder gänzlich zu vermeiden. Das Verfahren soll sich dabei durch einen geringen konstruktiven und steuerungstechnischen Aufwand auszeichnen.

Die erfindungsgemäße Lösung der Aufgabe ist durch die Merkmale des Anspruches 1 charakterisiert. Vorteilhafte Ausgestaltungen sind in den Unteransprüchen wiedergegeben.

Erfindungsgemäß erfolgt die Schadensfrüherkennung über geeignete Indikatoren, mittels welcher Veränderungen am Getriebe, der Druckmittelversorgung sowie der zur Getriebesteuerung gehörenden Bauteile frühzeitig ermittelt werden können. Dazu wird während des Betriebes des automatischen Getriebes ein aktueller Istwert wenigstens einer, einen Schaltvorgang wenigstens mittelbar charakterisierenden Größe bei jedem Schaltvorgang ermittelt. Dieser Istwert wird mit wenigstens einem Sollwert für gleichartige Schaltvorgänge verglichen. Bei Abweichung wird die Stellgröße zur Beaufschlagung der Reibelemente zur wenigstens mittelbaren Beeinflussung der den Schaltvorgang charakterisierenden Größe geändert. Entsprechend der Erfindung ist wenigstens ein Grenzwert für den Istwert einer den Schaltvorgang wenigstens mittelbar charakterisierenden Größe und/oder wenigstens ein Grenzwert für eine das Änderungsverhalten des Istwertes über eine Mehrzahl von hintereinander vorgenommenen gleichartigen Schaltungen, d.h. von einer ersten bestimmten Schaltstufe in eine nächste zweite Schaltstufe, wenigstens mittelbar charakterisierende Größe festsetzbar. Es besteht dabei die Möglichkeit lediglich einen Grenzwert festzusetzen oder aber einen oberen und einen unteren Grenzwert. Den Grenzwerten sind dabei Kriterien zugeordnet, welche ein zulaßbares Verhalten des Istwertes gegenüber dem Grenzwert charakterisieren. Bei Abweichung des Grenzwertes vom Istwert derart, daß diese Kriterien nicht mehr erfüllt sind, wird eine Fehlermeldung erzeugt bzw. ein Fehlersignal gebildet. Die Kriterien für den Vergleich der Istwerte bzw. des Änderungsverhaltens des Istwertes mit dem Grenzwert oder den Grenzwerten bringen dabei zum Ausdruck, daß mit dem Grenzwert bzw. den Grenzwerten ein bestimmter Istwertbereich abgedeckt werden soll, innerhalb dessen der Betrieb unschädlich für das Getriebe ist.
Die den Schaltvorgang wenigstens mittelbar charakterisierende Größe kann auch von einer Stellgröße gebildet werden.

Vorzugsweise handelt es sich bei den Grenzwerten für die den Istwert der den Schaltvorgang wenigstens mittelbar charakterisierenden Größe um einen Maximalwert, welcher nicht überschritten werden darf. Minimalwerte sind ebenfalls möglich. Als die den Schaltvorgang wenigstens mittelbar charakterisierenden Größen kommen im wesentlichen
1) die einzelnen, zur Beurteilung eines Schaltvorganges wesentlichen Zeitbereiche zur Charakterisierung dessen Ablaufes und/oder
2) die, die Reibelemente wenigstens mittelbar beaufschlagenden Drücke
in Betracht.

Erfaßbare und/oder bestimmbare Zeitbereiche sind vorzugsweise
- TMAX =: Zeit; nach der der Sicherheitsdruckhochlauf beginnt und nach deren Ablauf der Synchronisierungsvorgang abgeschlossen sein sollte.

Bei den genannten Drücken handelt es sich zum einen um den Anfangsdruckwert, d.h. ein im Bereich des Zeitpunktes vom Abgeben eines Gangschaltsignales erhöhter und den Reibelementen zugeführter Druckwert, und/oder den zu Beginn des Synchronisiervorganges anliegenden Regeldruckwert und/oder die Verläufe der vorgenannten Größen. Diese stellen im allgemeinen auch die Stellgrößen für die Einsteuerung bestimmter Zeitintervalle für gleichartige Schaltungen dar. Der Anfangsdruckwertverlauf kann während des Zeitpunktes vom Abgeben eines Gangwechselsignales bis zum Beginn des Synchronisiervorganges einen linearen Verlauf, d.h. je nach Art des Schaltvorganges ansteigend oder abfallend sein. Es besteht jedoch auch die Möglichkeit, den Anfangsdruckwert bis zum Zeitpunkt des Synchronisiervorganges konstant zu halten. Eine Änderung bezüglich des Anfangsdruckwertes bezieht sich dabei immer auf eine Änderung des Druckwertes zur Anpressung der Reibelemente in einem Zeitraum vom Abgeben eines Gangwechselsignales bis zum Beginn des Synchronsiervorganges. In Analogie gilt diese Aussage auch für den Regeldruckwertverlauf, allerdings erst mit Beginn der Synchronisation.

Es genügt dabei die Erfassung einer den Schaltvorgang wenigstens mittelbar charakterisierenden Größe. Denkbar sind jedoch auch die Erfassung einer Vielzahl, wenigstens jedoch zweier verschiedener Größen, wobei zusätzlich Prioritäten zwischen den Istgrößen hinsichtlich deren Verhaltens gegenüber den jeweiligen Grenzwerten vereinbart werden können.

Die erfindungsgemäße Lösung ermöglicht es, eine Früherkennung von Störfällen während des Betriebes automatischer Getriebe ohne zusätzlichen Aufwand mit der bereits vorhandenen Getriebesteuerung durchzuführen, indem die den Schaltvorgang wenigstens mittelbar charakterisierenden Größen, insbesondere bei adaptiv gestalteten Schaltprogrammen, gleichzeitig als Indikatoren für eine mögliche Störung verwendet werden. Eine Früherkennung durch auffällige Veränderung dieser den Schaltvorgang wenigstens mittelbar charakterisierenden Größen erfolgt dabei während des Betriebes des automatischen Getriebes. Eine Schädigung des Getriebes kann dann durch mögliche anschließend vorzunehmende Diagnosemaßnahmen vermieden werden. Im Gegensatz zum Stand der Technik, bei welchem Indikatoren zur Erkennung von Störfällen verwendet werden, die bereits auf Schädigungen des Getriebes oder aber der mit diesem verbundenen Komponenten beruhen, können mit dem erfindungsgemäßen Verfahren Schädigungen von vornherein fast vollständig ausgeschlossen werden. Ein besonderer Vorteil des erfindungsgemäßen Verfahrens besteht darin, daß bezüglich der vorrichtungsmäßigen Umsetzung keine zusätzlichen Maßnahmen zur ansonsten üblicherweise eingesetzten Getriebesteuerung eines automatischen Fahrzeuggetriebes erforderlich sind. Lediglich bezüglich der Verarbeitung der den Schaltvorgang wenigstens mittelbar charakterisierenden Größen sind in der Steuereinrichtung zusätzliche Mittel vorzusehen, welche einen Vergleich mit einem Grenzwert ermöglichen. Im einfachsten Fall kann dies durch eine abzuarbeitende Routine von einer elektronischen Steuer- bzw. Regeleinheit ausgeführt werden. Die erfindungsgemäße Lösung ist damit sehr kostengünstig und auf einfache Art und Weise in bereits vorhandenen Getriebesteuerungen nachrüstbar.

Für die Verarbeitung des Fehlersignales bestehen folgende Möglichkeiten:
1. Anzeige oder akustisches Signal und/oder.
2. Verarbeitung des Fehlersignales als Eingangssignal zur Ansteuerung des Getriebes, oder aber einer mit dem Getriebe gekoppelten Komponente, um den Gefahrenzustand zu beseitigen.

Im einzelnen besteht des weiteren die Möglichkeit, die Steuerung derart zu gestalten, daß beispielsweise rein rechnerisch zuerst die Stellgröße ermittelt wird, ein Vergleich mit dem Grenzwert durchgeführt wird und bei Überschreitung bzw. Nichterfüllung der zugelassenen Kriterien, eine Fehlermitteilung erzeugt wird, jedoch gleichzeitig diese Stellgröße am Ausgang der Steuereinrichtung nicht ausgegeben wird, d.h. daß lediglich eine Überschreitung der Grenzwerte verhindert wird.

Im allgemeinen reicht bereits eine den Schaltvorgang wenigstens mittelbar charakterisierende Größe aus, welche zur Überwachung fortlaufend ermittelt wird.

Vorzugsweise erfolgt eine Änderung der Stellgröße zur Beeinflussung der den Schaltvorgang charakterisierenden Größe adaptiv. Derartige Konzepte sind beispielsweise bereits aus den folgenden Druckschriften bekannt:
1. DE 19 32 986 C
2. DE 32 05 767 C
3. EP 0 176 750 B2
4. EP 0 435 372 B1.

In diesen Druckschriften sind Verfahren beschrieben, welche bei Nichterreichen der Sollwertvorgaben für bestimmte Zeitbereiche eine Korrektur des Regeldruckes durch Druckwertänderungen bei der nächsten Schaltung realisieren. Vorzugsweise werden bei diesen Adaptionskonzepten die nachfolgend genannten Größen als Indikatoren für eine mögliche Schädigung herangezogen:
1)
   - t_{UReal} =: Zeitdauer vom Abgeben eines Gangwechselsignals bis zum Beginn der Synchronisation der Reibelemente
2)
   - t_{Rutsch} =: Rutschzeit der Reibelemente
3)
   - PA =: Anfangsdruckwert
4)
   - PR =: Regeldruck

Der Anfahgsdruck PA beeinflußt dabei primär die Zeitdauer t_{UReal}, während der Regeldruck als primärer Einflußfaktor für die Rutschzeit der Reibelemente t_{Rutsch} verwendet wird. Diese Indikatoren werden entweder einzeln als Istwertgrößen überwacht oder aber in verschiedener Kombination miteinander. Es besteht des weiteren auch hier die Möglichkeit, andere als diese bevorzugten Indikatoren zur Überwachung zu nutzen. Diese können beispielsweise die Zeitdauer, nach welcher der Schaltvorgang abgeschlossen ist t_{synchron}, die Zeitdauer, nach der der Sicherheitsdruckhochlauf beginnt und nach deren Ablauf der Synchronsiervorgang abgeschlossen sein sollte TMAX oder aber die Zeitdauer, nach der der Betriebsdruck wieder anliegt, T-Schaltende sein.

Werden die Sollwertvorgaben für die Indikatoren nicht erreicht, erfolgt ebeispielsweise zuerst eine Korrektur des Anfangs- und/oder Regeldruckwertes durch Druckwertänderungen, um einen bestimmten Korrekturwert ΔPR und/oder ΔPA bei der nächsten gleichartigen Schaltung. Dies wird über eine Vielzahl von Schaltvorgängen beim immer wieder gleichartigen Übergang von einer bestimmten ersten Schaltstufe in eine bestimmte zweite Schaltstufe realisiert, und zwar so lange, bis die Sollwertvorgabe für die Indikatoren, insbesondere für die einzelnen Zeitdauern, erreicht ist. Bei Über- oder Unterschreitung bestimmter für diese Istwerte vorgebbarer Grenzwerte kann auf eine Gefährdung des Getriebes geschlossen werden. In Anologie gilt dies auch bei Verwendung der Stellgrößen PA und PR als Indikatoren. In diesem Fall kann nach entsprechender Fehlermeldung entweder eine ausführliche Diagose des Getriebes bzw. der mit dem Getriebe gekoppelten Komponenten vorgenommen werden. Andererseits besteht jedoch auch die Möglichkeit, bei Gefährdungen, die durch Getriebesteueraktionen hervorgerufen werden können, diese über die Getriebesteuerung direkt zu regulieren.

Eine weitere Möglichkeit besteht darin, das Verhalten der Istgrößen einer den Schaltvorgang wenigstens mittelbar charakterisierenden Größe über eine Mehrzahl von Schaltvorgängen zu erfassen und bei einer übermäßig starken Änderung, d.h. beispielsweise einer Überschreitung eines Änderungsfaktors, welcher aus dem Quotienten aus der Änderung der Stellgröße und der Anzahl der Schaltvorgänge, über welche dieses Änderungsverhalten ermittelt wird, gebildet wird, ebenfalls eine Fehlermeldung zu erzeugen.

Die erfindungsgemäße Lösung wird nachfolgend anhand von Figuren erläutert. Es zeigen:
- Fig. 1: anhand eines Schaltverlaufsdiagrammes die Zuordnung von Grenzwerten;
- Fig. 2: eine Steuereinrichtung zur Durchführung der erfindungsgemäßen Früherkennung.

Die Figur verdeutlicht schematisch eine Steuerdruckkennlinie für Hochschaltungen in einem mechanischen Getriebe. Dazu ist der Druckverlauf über der Zeit in einem Diagramm aufgetragen. Die einzelnen Werte sind wie folgt bezeichnet:
- USTELLMAX =: Betriebsdruck
- PR =: berechneter Regeldruck
- PA =: Anfangsdruckwert
- PATIME =: Zeit, in welcher der Anfangsdruckwert auf den Regeldruckwert linear oder degressiv ansteigt oder abfällt
- TMAX =: Zeit, nach der der Sicherheitsdruckhochlauf beginnt und nach deren Ablauf der Synchronisiervorgang abgeschlossen sein sollte
- TSCHALT-ENDE =: Zeit, nach der der Betriebsdruck anlegt.

Für den Schaltvorgang sind des weiteren folgende Meß- und Regelgrößen wesentlich:
- n_{SYNCHRON 1} =: Motordrehzahl bei Beginn des Schaltvorganges
- n_{SYNCHRON 2} =: Motordrehzahl nach Beendigung des Schaltvorganges
- t_{UREAL} =: Zeit bis zu Beginn des Synchronisiervorganges
- t_{RUTSCH} =: Rutschzeit der Lamellen
- t_{SYNCHRON} =: Zeit, nach der der Schaltvorgang abgeschlossen wurde.

Dem Diagramm ist zu entnehmen, daß nach dem Auftreten eines Gangschaltsignales, in der Zeitachse zum Zeitpunkt 0 die Motordrehzahl n1 noch bis zum Erreichen eines Freilaufpunktes, hier dem Punkt 1 ansteigt, worunter man den Punkt versteht, an dem die dem neuen Gang zugeordneten Reibelemente das volle Moment übernehmen während die dem alten Gang zugeordneten Reibelemente lösen. Ab diesem Freilaufpunkt beginnt die Motordrehzahl n1 abzusinken, während gleichzeitig die Reibelemente schleifen. Die Zeit bis zum Erreichen dieses Freilaufpunktes, der dem Beginn des Synchronisationsvorganges entspricht, ist mit t_{UREAL} bezeichnet. An diese schließt sich die Rutschzeit der Reibelemente t_{RUTSCH} an. Im Punkt 2 im Diagramm laufen beide Reibelemente synchron, der neue Gang ist eingelegt, die Reibelemente haften und die beiden Drehzahlen sind entweder gleich oder entsprechend dem Stufensprung identisch.

Der Schaltkomfort ist durch den Verlauf des Abtriebsmomentes bestimmt. Der Momentensprung zum Zeitpunkt t_{SYNCHRON} soll möglichst gering sein.

Der einzuhaltende Sollwert für den Schaltvorgang ist die Zeit bis zum Beginn des Synchronisationsvorganges t_{UREAL}. Die Stellgröße zur Beeinfüssung dieses Zeitraumes ist der Anfangsdruckwert PA, das Stellglied eine Einrichtung zum Aufbringen des Anfangsdruckes. Zur Durchführung einer adaptiven Regelung werden die Sollwerte für die Zeit bis zum Beginn des Synchronisationsvorganges t_{UREAL} beispielsweise in einem Last/Drehzahlkennfeld abgelegt. Dabei kann prinzipiell die Rasterung für die Last- und Drehzahlklassen beliebig gewählt werden, wobei die Sollwerte in einem Festwertspeicher in einer elektronischen Getriebesteuereinheit gespeichert werden können. Des weiteren sind Meßeinrichtungen vorgesehen, welche die aktuelle Zeit bei jedem Schaltvorgang bis zu Beginn des Synchronisationsvorganges ermitteln. Als weitere Einflußparameter werden das Drehmoment je Lastgeberstellung, die Drehzahl beim Schalten sowie das Massenträgheitsmoment der einzelnen Komponenten berücksichtigt. Weicht der gemessene bzw. ermittelte Istwert vom Sollwert ab, wird ein Korrekturwert am Ausgang der Steuereinrichtung ausgegeben und an der Druckeinheit wirksam. Die Stellgröße PA ändert sich um den Korrekturwert. Der geänderte Anfangsdruckwert wird dann abgespeichert.

Eine Änderung der Stellgröße um einen festen Korrekturwert ist additativ oder multiplikativ möglich.

Andere Konzepte der Anpassung der Zeit bis zum Beginn des Synchronisationsvorganges durch Änderung des Anfangsdruckwertes sind ebenfalls denkbar.

Des weiteren besteht die Möglichkeit, die Schaltkonzeption dahingehend zu gestalten, daß auch der Regeldruck adaptiert und damit die mögliche Rutschzeit beeinflußt werden kann.

In diesem Fall kann festgelegt werden, daß umgekehrt die Regeldruckwertadaption Vorrang vor der Anfangsdruckwertadaption besitzt oder umgekehrt.

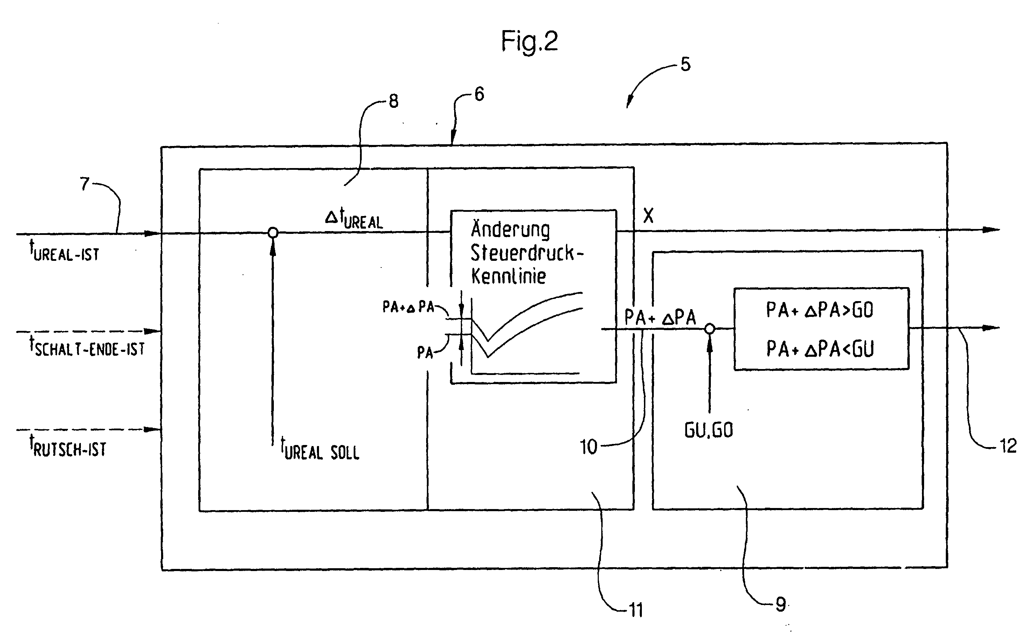

Für den Anfangsdruckwert PA können, wie anhand der Grenzwertkennlinien GI und GII dargestellt, ein oberer und ein unterer Grenzwert festgelegt werden, welche nicht überschritten bzw. unterschritten werden dürfen. Die adaptiv geänderten Anfangsdruckwerte werden dabei bei jedem Schaltvorgang mit den vorgegebenen Grenzwerten verglichen und bei Überschreitung von GI und Unterschreitung von GII wird eine Fehlermitteilung erzeugt. In Analogie kann dieser Vorgang auch für den Regeldruckwertverlauf erfolgen. Als Beispiel ist dazu ein erster oberer Grenzwert GIII für einen nicht zu überschreitenten Wert des Regeldruckes PR festsetzbar. Die Vergleiche der Stellgrößen mit den Grenzwerten können mittels einer Steuervorrichtung realisiert werden. Deren Arbeitsweise wird anhand eines Blockschaltbildes in Figur 2 verdeutlicht.

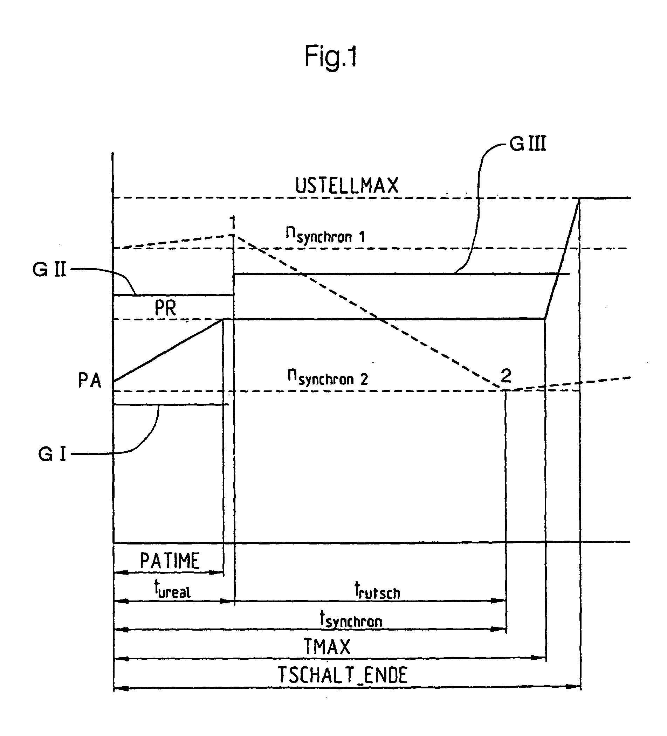

Figur 2 zeigt eine Steuervorrichtung 5. Diese umfaßt eine elektronische Steuer- und Regeleinrichtung 6. Die Steuer- bzw. Regeleinrichtung 6 umfaßt dabei wenigstens einen Eingang 7, welcher mit einer Einrichtung zur Erfassung wenigstens eines Istwertes einer den Schaltvorgang wenigstens mittelbar charakterisierenden Größe koppelbar ist. Diese Größe kann beispielsweise t_{UREAL} oder t_{RUTSCH} oder t_{SCHALT} sein. Es können aber auch mehrere dieser Größen parallel erfaßt werden. Zur Beeinflussung dieser Zeiträume erfolgt dann eine adaptive Änderung des Steuerdruckes - des Anfangssteuerdruckes und/oder des Regeldruckes. Dieser Istwert ist entsprechnd des in Figur 1 dargestellten Steuerkonzeptes dabei die Zeitdauer t_{UREAL-IST}. In der Steuer- und Regeleinrichtung 6 ist ein Vergleicher 8 integriert. Der Vergleicher 8 kann beispielsweise durch in der Steuer- und Regeleinrichtung 6 ablaufende Routinen realisiert werden. Vom Vergleicher werden beispielsweise dort abgelegte Sollwerte für die den Schaltvorgang wenigstens mittelbar charakterisierenden Größen, hier beispielsweise t_{UREAL-Soll} mit den tatsächlichen verglichen. Der Vergleich kann sich auch auf einen vorgebbaren Sollwertbereich erstrecken.

Bei Abweichung des Istwertes vom Sollwert wird der Anfangsregeldruckwert als Stellgröße beispielsweise um einen festleg- und vorgebbaren Wert geändert. Bei diesem Wert kann es sich um eine feste Größe handeln; es besteht theoretisch auch die Möglichkeit diesen Korrekturwert zu berechnen. Diese Änderung erfolgt mittels einer, dem Vergleicher 8 zugeordneten Einrichtung 11 zur Bestimmung der Änderung des Anfangsdruckwertverlaufes PA und Bildung einer Stellgröße X. Entsprechend dem Korrekturwert delta PA wird eine Stellgröße X zur Ansteuerung der Steuerdruckerzeugungseinheit am Ausgang der Steuer- bzw. Regeleinrichtung ausgegeben.

Gleichzeitig wird im dargestellten Fall der adaptiv geänderte Anfangsdruckwert PA+(delta PA) bei jedem Schaltvorgang mit einem oberen und einem unteren Grenzwert G_{O} und G_{U} für PA verglichen. Dies wird mittels eines weiteren Vergleichers 9 realisiert. Dieser weist einen Eingang 10 und einen Ausgang 12 auf. Der Eingang 10 ist dabei mit der Einrichtung 11 gekoppelt. Bei Über- bzw. Unterschreitung der Grenzwerte wird eine Fehlermeldung in Form eines Fehlersignales an einem Ausgang 12 ausgegeben.

## Patentansprüche

1. Verfahren zur Früherkennung von Störfällen beim Betrieb automatischer Fahrzeuggetriebe mit elektronisch ansteuerbaren Reibelementen zur Umschaltung zwischen verschiedenen Übersetzungsstufen,
1.1 bei welchen ein aktueller Istwert wenigstens einer den Schaltvorgang wenigstens mittelbar charakterisierenden Größen bei jedem Schaltvorgang ermittelt wird;
1.2 bei welchem der Istwert mit wenigstens einem Sollwert verglichen wird und bei Abweichung eine Stellgröße zur Beaufschlagung der Reibelemente zur wenigstens mittelbaren Beeinflussung der den Schaltvorgang wenigstens mittelbar charakterisierenden Größen geändert wird;
1.3 es ist wenigstens ein Grenzwert für wenigstens eine der nachfolgend genannten Größen festsetzbar:
- für einen Istwert der den Schaltvorgang wenigstens mittelbar charakterisierenden Größe und/oder
- für eine, das Änderungsverhalten des Istwertes über eine Mehrzahl von nacheinander vorgenommenen Schaltvorgängen wenigstens mittelbar charakterisierende Größe und/oder
- für die Stellgröße und/oder
- für das Änderungsverhalten der Stellgröße über eine Mehrzahl von nacheinander vorgenommenen gleichartigen Schaltvorgängen;
1.4 bei welchem bei jedem Schaltvorgang ein Sicherheitsdruckhochtauf beginnt;
1.5 dem Grenzwert sind Kriterien hinsichtlich seiner Größe gegenüber dem Istwert oder der Stellgröße zugeordnet;
1.6 bei Abweichung des Grenzwertes vom Istwert oder der Stellgröße derart, daß die Kriterien nicht mehr erfüllt sind, wird ein Fehlersignal erzeugt;
dadurch gekenngeichnet, daß
1.7 die Zeitdauer, nach deren Ablauf der Synchronisiervorgang abgeschlossen sein sollte und den Sicherheitsdruckhochlauf beginnt als Istwert der den Schaltvorgang charakterisierenden Größe ermittelt wird;
1.8 bei welchem bei Abweichung dieser Zeitdauer von einem vorgegebenen Sollzeitraum der Anfangs- und/oder Regeldruckwert als eine Stellgröße zum Aufbringen der erforderlichen Anpreßkraft der kraftschlüssig miteinander koppelbaren Reibelemente um einen Korrekturwert verändert wird.

2. Verfahren zur Früherkennung von Störfällen nach Anspruch 1, **dadurch gekennzeichnet, daß** die Änderung der Stellgröße um einen festen unveränderbaren Korrekturwert erfolgt.

3. Verfahren zur Früherkennung von Störfällen nach Anspruch 1, **dadurch gekennzeichnet, daß** die Änderung der Stellgröße um einen berechenbaren Korrekturwert erfolgt.

4. Verfahren zur Früherkennung von Störfällen nach Anspruch 3, **dadurch gekennzeichnet, daß** der Korrekturwert als Mittelwert einer bestimmbaren Vielzahl von hintereinander vorgenommenen gleichartigen Schaltvorgängen ermittelt wird.

5. Verfahren zur Früherkennung von Störfällen nach einem der Ansprüche 1 bis 4, **dadurch gekennzeichnet, daß** das Fehlersignal als Fehlermeldung über ein Display für den Fahrer sichtbar ist.

6. Verfahren zur Früherkennung von Störfällen nach einem der Ansprüche 1 bis 5, **dadurch gekennzeichnet, daß** das Fehlersignal dem Fahrer akustisch übermittelt wird.

7. Verfahren zur Früherkennung von Störfällen nach einem der Ansprüche 1 bis 5, **dadurch gekennzeichnet, daß** das Fehlersignal als Eingangsgröße zur Ansteuerung des Getriebes gesetzt wird.

8. Verfahren zur Früherkennung von Störfällen nach einem der Ansprüche 1 bis 7, **dadurch gekennzeichnet, daß** als Kriterium für den Grenzwert ein bestimmter einzuhaltender Wertebereich festgelegt wird.

9. Verfahren zur Früherkennung von Störfällen nach einem der Ansprüche 1 bis 8, **dadurch gekennzeichnet, daß** der Grenzwert für das Änderungsverhalten des Istwertes einer den Schaltvorgang wenigstens mittelbar charakterisierenden Größe ein bestimmbarer Quotient aus der Anzahl der Korrekturen zur Anzahl gleichartiger nacheinander vorgenommener Umschaltvorgänge ist.

## Claims

1. Method for the early detection of faults during the operation of automatic vehicle transmissions with electronically activatable friction elements for changing over between different transmission steps,
1.1 in which a current actual value of at least one variable at least indirectly characterising the shift operation is established upon each shift operation;
1.2 in which the actual value is compared with at least one set value and, in the case of a deviation, an alteration is made to a control variable for acting on the friction elements for at least indirectly influencing the variables at least indirectly characterising the shift operation;
1.3 at least one limiting value can be defined for at least one of the subsequently mentioned variables:
- for an actual value of the variable at least indirectly characterising the shift operation and/or
- for a variable at least indirectly characterising the alteration behaviour of the actual value over a plurality of successive shift operations and/or
- for the control variable and/or
- for the alteration behaviour of the control variable over a plurality of successive shift operations of the same kind;
1.4 in which a safety pressure run-up begins upon each shift operation;
1.5 criteria regarding the magnitude of the limiting value with respect to the actual value or the control variable are associated with the limiting value;
1.6 should the limiting value deviate from the actual value or the control variable such that the criteria are no longer fulfilled, an error signal is generated; **characterised in that**
1.7 the period at the end of which the synchronising operation should be concluded and the safety pressure run-up begins is established as the actual value of the variable characterising the shift operation;
1.8 in which method, should this period deviate from a predetermined set period, an alteration by a correction value is made to the initial and/or regulating pressure value as a control variable for applying the required contact force of the friction elements, which can be frictionally coupled together.

2. Method for the early detection of faults according to Claim 1, **characterised in that** the control variable is altered by a fixed, invariable correction value.

3. Method for the early detection of faults according to Claim 1, **characterised in that** the control variable is altered by a calculable correction value.

4. Method for the early detection of faults according to Claim 3, **characterised in that** the correction value is established as a mean value of a determinable plurality of successive shift operations of the same kind.

5. Method for the early detection of faults according to any one of claims 1 to 4, **characterised in that** the error signal is visible to the driver as an error message by way of a display.

6. Method for the early detection of faults according to any one of claims 1 to 5, **characterised in that** the error signal is acoustically transmitted to the driver.

7. Method for the early detection of faults according to any one of claims 1 to 5, **characterised in that** the error signal is set as an input variable for activating the transmission.

8. Method for the early detection of faults according to any one of claims 1 to 7, **characterised in that** a specific value range which is to be observed is defined as the criterion for the limiting value.

9. Method for the early detection of faults according to any one of claims 1 to 8, **characterised in that** the limiting value for the alteration behaviour of the actual value of a variable at least indirectly characterising the shift operation is a determinable quotient of the number of correction values to the number of successive shift operations of the same kind.

## Revendications

1. Procédé pour la reconnaissance anticipée de pannes lors du fonctionnement de transmissions automatiques de véhicules avec des éléments de frottement activables de façon électronique pour la commutation entre différents niveaux de rapport,
1.1 dans lequel une valeur réelle actualisée d'au moins une grandeur caractérisant au moins indirectement le changement de vitesse est déterminée lors de chaque changement de vitesse ;
1.2 dans lequel la valeur réelle est comparée avec au moins une valeur de consigne et, en cas d'écart, une grandeur de commande est modifiée pour solliciter les éléments de frottement pour influer au moins indirectement sur les grandeurs caractérisant au moins indirectement le changement de vitesse ;
1.3 on peut fixer au moins une valeur limite pour au moins l'une des grandeurs mentionnées ci-dessous :
- pour une valeur réelle de la grandeur caractérisant au moins indirectement le changement de vitesse et/ou
- pour une grandeur caractérisant au moins indirectement le comportement à la modification de la valeur réelle par rapport à un grand nombre de changements de vitesse effectués de façon successive et/ou
- pour la grandeur de commande et/ou
- pour le comportement à la modification de la grandeur de commande par rapport à un grand nombre de changements de vitesse du même type effectués de façon successive ;
1.4 dans lequel une accélération à la pression de sécurité démarre lors de chaque changement de vitesse ;
1.5 des critères concernant sa grandeur par rapport à la valeur réelle ou à la grandeur de commande sont attribués à la valeur limite ;
1.6 en cas d'écart entre la valeur limite et la valeur réelle ou la grandeur de commande de telle sorte que les critères ne sont plus satisfaits, un signal d'erreur est généré ;
**caractérisé en ce que**,
1.7 la durée, après laquelle le déroulement de l'opération de synchronisation devrait être déterminé et le démarrage à la pression de sécurité commence, est calculée en tant que valeur réelle de la grandeur caractérisant le changement de vitesse ;
1.8 dans lequel, en cas d'écart entre cette durée et une période prédéfinie de consigne, la valeur de pression initiale et/ou la valeur de pression de réglage est modifiée d'une valeur de correction en tant que grandeur de commande pour l'application de la force de pression nécessaire des éléments de frottement qui peuvent être couplés entre eux par adhérence.

2. Procédé pour la reconnaissance anticipée de pannes selon la revendication 1, **caractérisé en ce qu'**on effectue la modification de la valeur de commande avec une valeur de correction fixe et non modifiable.

3. Procédé pour la reconnaissance anticipée de pannes selon la revendication 1, **caractérisé en ce qu'**on effectue la modification de la grandeur de commande avec une valeur de correction pouvant être calculée.

4. Procédé pour la reconnaissance anticipée de pannes selon la revendication 3, **caractérisé en ce que** la valeur de correction est déterminée en tant que valeur moyenne d'un grand nombre déterminable de changements de vitesse du même type effectués de façon successive.

5. Procédé pour la reconnaissance anticipée de pannes selon l'une quelconque des revendications 1 à 4, **caractérisé en ce que** le signal d'erreur est visible en tant que message d'erreur au moyen d'un écran pour le conducteur.

6. Procédé pour la reconnaissance anticipée de pannes selon l'une quelconque des revendications 1 à 5, **caractérisé en ce que** le signal d'erreur est transmis au conducteur de façon sonore.

7. Procédé pour la reconnaissance anticipée de pannes selon l'une quelconque des revendications 1 à 5, **caractérisé en ce que** le signal d'erreur est posé comme grandeur d'entrée pour l'actionnement de la transmission.

8. Procédé pour la reconnaissance anticipée de pannes selon l'une quelconque des revendications 1 à 7, **caractérisé en ce qu'**une plage de valeurs définie à respecter est fixée comme critère pour la valeur limite.

9. Procédé pour la reconnaissance anticipée de pannes selon l'une quelconque des revendications 1 à 8, **caractérisé en ce que** la valeur limite pour le comportement à la modification de la valeur réelle d'une grandeur caractérisant au moins indirectement le changement de vitesse est un quotient calculable du nombre des corrections par rapport au nombre de changements de vitesse du même type effectués de façon successive.
